# EUROPEAN PATENT SPECIFICATION

(11) **EP 3 640 060 B1**
(45) Date of publication and mention of the grant of the patent: **26.07.2023**
(21) Application number: 19202218.4
(22) Date of filing: 09.10.2019
(51) Int. Cl.: B60C 15/06

(54) **PNEUMATIC TIRE**
LUFTREIFEN
PNEUMATIQUE

(30) Priority: 16.10.2018 US 201816161629
(43) Date of publication of application: 22.04.2020
(73) Proprietor: The Goodyear Tire & Rubber Company, Akron, OH 44316 (US)
(72) Inventor: WELBES, Paul, L-9184 Schrondweiler (LU); KOTWICA, Jaroslaw Antoni, L-7547 Rollingen (LU)
(74) Representative: Kutsch, Bernd

(56) References cited:
- EP-A1- 3 196 055
- EP-A1- 3 501 857
- JP-A- 2007 210 363

## Description

### Field of the Invention

The present invention relates to a pneumatic tire and, more specifically, to a pneumatic bead and sidewall construction.

### Background of the Invention

A pair of beads is common in conventional tires. A carcass is usually set to bridge the beads on both sides. A bead usually has a core and an apex extending from the core in a radially outward direction. A carcass ply of the carcass is often turned up around the bead core from the axially inner side toward the outer side. Due to such a structure, a carcass ply may be divided into a main portion and a turn-up portion. The bead portion of a tire may be fixed onto a rim. US-B-9,931,895 describes a respective bead structure of a pneumatic tire.

EP 3 196 055 A1 and JP 2007 210 363 A each describe a tire having a first and a second carcass ply and a bead structure for such a tire in accordance with the preamble of claim 1.

EP 3 501 857 A1, which has been published only after the priority date of this application, describes a tire wherein an apex abuts a radially upper surface of the bead core, and wherein a stiffener member is partially disposed between the ply and the apex. The stiffener member is also partially disposed between a downward and towards the bead core extending first portion of the ply and another upward and away from the bead core extending second portion of the ply.

### Summary of the Invention

The invention relates to a tire in accordance with claim 1.

Dependent claims refer to preferred embodiments of the invention.

A first example tire in accordance with a preferred embodiment of the present invention includes a tread, a sidewall extending from one edge of the tread approximately in a radially inward direction to a bead structure, and a carcass extending along an axially inner side of the sidewall to the bead structure. The carcass includes a first ply and a second ply extending radially inward from the sidewall to a terminal end directly adjacent the bead structure. The bead structure includes a circumferentially extending bead core axially inward of the sidewall, a chafer extending radially inward toward the bead core, an apex abutting the bead core, and an inner stiffener member disposed between the first ply and the apex, the inner stiffener member extending radially outward from a location proximate the bead core to a location radially outward from the apex.

According to a preferred aspect of the first example tire, the bead structure further includes a second chafer proximate the bead core.

According to another preferred aspect of the first example tire, the apex is positioned on a radially inner side of the sidewall.

According to yet another preferred aspect of the first example tire, the apex is positioned on an axially outer side of the bead core.

According to still another preferred aspect of the first example tire, the bead structure further includes a second chafer abutting a rim on which the tire is mounted.

According to yet another preferred aspect of the first example tire, the bead structure further includes a second apex disposed adjacent a second chafer apex on an axially outer side of the second ply.

According to still another preferred aspect of the first example tire, the bead structure further includes a second apex extending from a radially outer side of the bead core along the second ply in a radially outward direction to a location adjacent both the sidewall and a second chafer.

According to yet another preferred aspect of the first example tire, the apex contains a reinforcing material.

According to still another preferred aspect of the first example tire, the chafer contains a reinforcing material.

According to yet another preferred aspect of the first example tire, the inner stiffener member contains a reinforcing material.

A second example tire in accordance with a preferred aspect of the present invention includes a tread, a sidewall extending from one edge of the tread approximately in a radially inward direction to a bead structure, and a carcass extending along an axially inner side of the sidewall to the bead structure. The carcass includes a first ply and a second ply. The bead structure includes a circumferentially extending bead core axially inward of the sidewall, a chafer extending radially inward toward the bead core, an apex abutting a radially upper surface of the bead core, and an inner stiffener member disposed partially between the first ply and the apex. The inner stiffener member also is partially disposed between one portion of the first ply and another portion of the first ply.

According to a preferred aspect of the second example tire, the bead structure further includes a second chafer adjacent the bead core.

According to another preferred aspect of the second example tire, the apex is positioned on a radially inner side of the sidewall.

According to yet another preferred aspect of the second example tire, the apex is positioned on an axially outer side of the bead core.

According to still another preferred aspect of the second example tire, the bead structure further includes a second chafer abutting a rim on which the tire is mounted.

A third example tire in accordance with a preferred aspect of the present invention includes a tread, a sidewall extending from one edge of the tread approximately in a radially inward direction to a bead structure, and a carcass extending along an axially inner side of the sidewall to the bead structure. The carcass includes a first ply and a second ply extending radially inward from the sidewall to a terminal end directly adjacent the bead structure. The bead structure includes a circumferentially extending bead core axially inward of the sidewall, a chafer extending radially inward toward the bead core, a first apex abutting the bead core, an inner stiffener member disposed between the first ply and the first apex, and a second apex disposed between the second ply and the chafer.

According to a preferred aspect of the third example tire, the second apex is disposed adjacent the chafer on an axially outer side of the second ply.

According to another preferred aspect of the third example tire, the second apex member extends from a radially outer side of the bead core along the second ply in a radially outward direction to a location adjacent both the sidewall and the chafer.

According to yet another preferred aspect of the third example tire, the first apex and the second apex both contain a reinforcing material.

According to still another preferred aspect of the third example tire, the inner stiffener member contains a reinforcing material.

### Brief Description of the Drawings

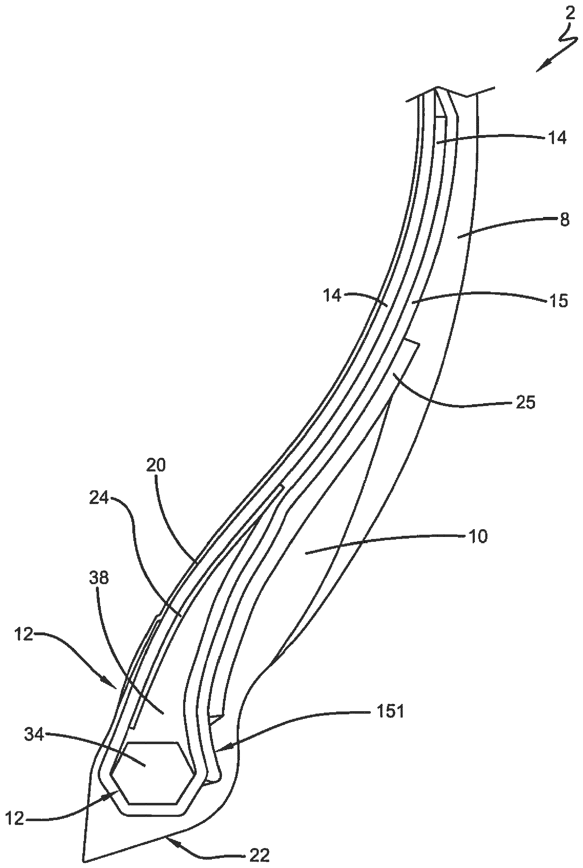

A more complete appreciation of the invention and many of the attendant advantages thereof will be readily obtained as the same becomes better understood by reference to the following detailed description when considered in connection with the accompanying drawings, wherein FIG. 1 is an enlarged cross-sectional view showing part of a tire in accordance with an embodiment of the present invention.

### Detailed Description of Example Embodiments of the Present invention

The examples will be described below with reference to the accompanying drawing (FIG. 1), Vertical directions correspond to radial directions of the pneumatic or non-pneumatic tire 2, lateral directions correspond to axial directions of the tire, and directions perpendicular to the drawing sheet of FIG. 1 are circumferential directions of the tire.

The tire 2 includes a tread (not shown), a sidewall 8, a carcass with a first ply 14 and a second ply 15, a belt (not shown), an inner liner 20, and two bead structures 12 (one shown), each including a bead core 34, a first chafer 10, a second chafer 22, a first apex 38, an inner stiffener 24, and a second apex 25.

The tread may be convex in a radially outward direction. The tread forms a tread surface, which may contact a road surface. Grooves may be formed in the tread and thereby shape a tread pattern. The tread may have a base layer and a radially outer cap layer. The cap layer may be laminated on to the base layer. The base layer may have a crosslinked rubber with excellent adhesiveness. The typical rubber material for the base layer may be natural rubber. The cap layer may have a crosslinked rubber with excellent wear resistance, heat resistance, and/or grip capability.

The sidewall 8 extends from the edge of the tread in an approximately radially inward direction. The radially outer edge of sidewall 8 is bonded to the tread.

The radially inner edge of sidewall 8 is preferably bonded to the first and/or the second chafer 10, 22.

The sidewall 8 is preferably constructed of a crosslinked rubber with excellent cut resistance and wear resistance.

The sidewall 8 and the first and second chafer 10, 22 serve to prevent damage to the carcass plies 14, 15.

The second chafer 22 is preferably positioned on the radially inner side of the sidewall 8.

The second chafer 22 preferably abuts a flange of a rim (not shown) on which the tire 2 is to be mounted.

The first chafer 10 is preferably positioned on the axially outer side of the bead structure 12 and the second carcass ply 15.

The bead structure 12 is preferably positioned on the axially inner side of the first chafer 10.

The first ply 14 extends preferably adjacent to and axially outward of the inner liner 20 on the axially inner side of the sidewall 8. It turns around the bead core 34 and has a turn-up portion with a radially outermost end. The radially outermost end is preferably located radially above, more preferably at least 10 mm or at least 20 mm radially above the radially outermost end of all of the first and the second apex 38, 25 and the first and the second chafer 22, 10.

The second ply 15 preferably extends axially outward of the first carcass ply and the turn-up portion of the first carcass ply 15. The second ply preferably does not turn around the bead core 34 and has thus no turn-up portion and has its radially innermost end preferably located between the radially outermost point of the bead core 34 and the radially innermost point of the bead core 34 such as at about bead core center height.

The bead 12 structure is preferably formed with a core 34 and the first apex 38. The bead core 34 may be ring-shaped and include a wound non-stretchable wire. A typical material for the bead wire is.

The second apex 38 preferably extends from the bead core 34 in a radially outward direction.

The second apex 38 preferably tapers as it extends in a radially outward direction between portions of the first carcass ply 14.

The first chafer 10 and/or the second apex 38 may be a crosslinked rubber composition, such as a diene-based rubber. Specific examples of diene-based rubbers are natural rubber (NR), polyisoprene (IR), polybutadiene (BR), acrylonitrile-butadiene copolymer (NBR) and polychloroprene (CR). These rubbers may also be used in combination of two or more for the second apex 38.

The rubber composition for forming the first chafer 10 and/or the second apex 38 may contain a reinforcing material, such as carbon black. Examples of carbon blacks may be a carbon black with fast extruding furnace (FEF), general purpose furnace (GPF), high abrasion furnace (HAF), super abrasion furnace (SAF), and intermediate SAF (ISAF) grades.

The inner liner 20 is disposed on the inner side of the first carcass ply 14. The inner liner 20 is bonded to the inner surface of the first carcass ply 14. The inner liner 20 may be a crosslinked rubber with excellent air shielding properties. Example base rubbers for the inner liner 20 may be butyl rubber or halogenated butyl rubber. The inner liner 20 thus helps to retain the inflation pressure of the tire 2.

The second chafer 22 is preferably disposed adjacent the bead 12. When the tire 2 is mounted on a rim, the second chafer 22 at least partially abuts the rim and thereby protects the bead structure 12.

The second chafer 22 may be integrated with the second chafer 10 as a single chafer component.

The inner stiffener 24 is disposed on an axially outer side of the first carcass ply 14 and adjacent to an along a portion of the first carcass ply 14.

The inner stiffener 24 preferably extends generally from the radially outer side of the bead core 38 along the first carcass ply 14 in an approximately radially outward direction to adjacent a location where the first carcass ply 14 rejoins itself.

Preferably, the radially innermost end of the inner stiffener 24 is located radially above, more preferably 1 mm to 15 mm or 1 mm to 5 mm radially above the radially outermost point of the bead core 34.

Preferably, the radially outermost end of the inner stiffener 24 is located radially above, more preferably 1 mm to 15 mm or 1 mm to 10 mm radially above the radially outermost point of the first apex 38.

The second apex 25 is preferably disposed adjacent the second chafer 10 on an axially outer side of the second carcass ply 15.

Preferably, the second apex 25 extend generally from the radially outer side of the bead core 34 along the second carcass ply 15 in an approximately radially outward direction to adjacent a location where the sidewall 8 and the second chafer 10 join.

Preferably, the radially innermost end of the second apex 25 is located radially above, more preferably 2 mm to 20 mm or 3 mm to 10 mm radially above the radially outermost point of the bead core 34.

Preferably, the radially outermost end of the second apex 25 is located radially above, more preferably 5 to 40 mm or 10 to 30 mm radially above the radially outermost point of the first apex 38.

The inner stiffener 24 and second apex 25 preferably include a cross-linked rubber composition such as a diene-based rubber. Examples of such diene-based rubbers may be natural rubber (NR), polyisoprene (IR), polybutadiene (BR), acrylonitrile-butadiene copolymer (NBR), and polychloroprene (CR) rubbers. These rubbers may also be used in combination of two or more for the inner stiffener 24 and the second apex 25.

The rubber composition for forming inside stiffener 24 and the second apex 25 may contain a reinforcing material, such as carbon black. Examples of carbon blacks may be a carbon black with fast extruding furnace (FEF), general purpose furnace (GPF), high abrasion furnace (HAF), super abrasion furnace (SAF), and intermediate SAF (ISAF) grades.

In accordance with the present invention, the second carcass ply 15 extends radially inward from the tread to a location radially adjacent the bead core 34 (FIG. 1). The second carcass ply 15 further extends axially outward of all portions of the first carcass ply 14 proximate the bead structure 12. Combined with the inner stiffener 24 and/or the second apex 25, such a second carcass ply 15 provides improved tire durability without altering the other components (e.g., bead core 34, first chafer 10, second chafer 22, second apex 38, etc.) of the bead structure 12. Such a construction may also help to reduce material cost, weight, and rolling resistance of the tire 2.

One example tire 2 in accordance with the present invention includes a tread, a sidewall 8 extending from one edge of the tread approximately in a radially inward direction to a bead structure 12, and a carcass 14, 15 extending along an axially inner side of the sidewall to the bead structure 12. The carcass includes the first ply 14 and the second ply 15. The second ply 15 extends radially inward from the sidewall 8 to a terminal end 151 directly adjacent the bead structure 12. The bead structure 12 includes a circumferentially extending bead core 34 axially inward of the sidewall 8, a chafer 22 extending radially inward toward the bead core 34, an apex 38 abutting the bead core 34, and an inner stiffener member 24 disposed between the first ply 14 and the apex 38. The inner stiffener member 24 extends radially outward from a location proximate the bead core 34 to a location radially outward from the apex 38 (FIG. 1).

Another example tire 2 in accordance with the present invention includes a tread, a sidewall 8 extending from one edge of the tread approximately in a radially inward direction to a bead structure 12, and a carcass 14, 15 extending along an axially inner side of the sidewall 8 to the bead structure12. The carcass includes the first ply 14 and the second ply 15. The bead structure 12 includes a circumferentially extending bead core 34 axially inward of the sidewall 8, a chafer 10 extending radially inward toward the bead core 34, an apex 38 abutting a radially upper surface of the bead core 34, and an inner stiffener member 24 disposed partially between the first ply 14 and the apex 38. The inner stiffener member 24 is also partially disposed between one portion of the first ply 14 and another portion of the first ply (FIG. 1).

Still another example tire 2 in accordance with the present invention includes a tread, a sidewall 8 extending from one edge of the tread approximately in a radially inward direction to a bead structure 12, and a carcass 14, 15 extending along an axially inner side of the sidewall to the bead structure12. The carcass includes the first ply 14 and the second ply 15. The second ply 15 extend radially inward from the sidewall to a terminal end 151 directly adjacent the bead structure 12. The bead structure 12 includes a circumferentially extending bead core 34 axially inward of the sidewall 8, a chafer 10 extending radially inward toward the bead core 34, a first apex 38 abutting the bead core 34, an inner stiffener member 24 disposed between the first ply 14 and the first apex 38, and a second apex 25 disposed between the second ply 15 and the chafer 10 (FIG. 1).

## Claims

1. A tire comprising a tread, a sidewall (8) extending from one edge of the tread approximately in a radially inward direction to a bead structure (12), and a carcass extending along an axially inner side of the sidewall (8) to the bead structure (12), the bead structure (12) including a circumferentially extending bead core (34) axially inward of the sidewall (8) and a first chafer (10) extending at least partially radially inward toward the bead core (34), and the carcass having a first ply (14) and a second ply (15), **characterized in that**
(i) the second ply (15) extends radially inward from the sidewall (8) to a terminal end (151) adjacent the bead structure (12), a first apex (38) abuts the bead core (34) or a radially upper surface of the bead core (34), and a stiffener member (24) is disposed at least partially between the first ply (14) and the first apex (38), the stiffener member (24) extending radially outward from a location proximate the bead core (34) to a location radially outward from the first apex (38); and/or
(ii) a first apex (38) abuts the bead core (34) or a radially upper surface of the bead core (34), and a stiffener member (24) is partially disposed between the first ply (14) and the first apex (38), the stiffener member (24) being also partially disposed between a downward and towards the bead core (34) extending first portion of the first ply (14) and another upward and away from the bead core (34) extending second portion of the first ply (14), and further wherein at least one of the first apex (38), the stiffener member and the first chafer (10) contain a reinforcing material; and/or
(iii) the second ply (15) extends radially inward from the sidewall (8) to a terminal end (151) adjacent the bead structure (12), a first apex (38) abuts the bead core (34) or a radially upper surface of the bead core (34), a stiffener member (24) is disposed at least partially between the first ply (14) and the first apex (38), and a second apex (25) is at least partially disposed between the second ply (15) and the first chafer (10).

2. The tire of claim 1, wherein the bead structure (12) further includes a second chafer (22) proximate the bead core (34) and/or located at least partially radially inward of the bead core (34).

3. The tire of claim 1 wherein the first chafer (10) extends at least partially axially outward of the second ply (15).

4. The tire of claim 1, 2 or 3 wherein the second apex (25) of option (iii) or a second apex (25) in option (i) or (ii) is positioned on an axially outer side of the bead core (34) and/or radially upward of the bead core (34).

5. The tire of at least one of the previous claims wherein the first and/or the second apex (25, 38) contains a reinforcing material.

6. The tire of at least one of the previous claims wherein the first and/or the second chafer (22, 10) contains a reinforcing material.

7. The tire of at least one of the previous claims wherein the stiffener member (24) contains a reinforcing material.

8. The tire of claim 1 wherein the bead structure (12) includes a second chafer (22) adjacent the bead core (34).

9. The tire of claim 1 wherein a second apex (25) is positioned on an axially inner side of the sidewall (8).

10. The tire of claim 1 wherein a second apex (25) is positioned on an axially and radially outer side of the bead core (34) or a second apex (25) is positioned on a radially outer side of the bead core (34).

## Patentansprüche

1. Reifen, der eine Lauffläche, eine sich von einer Kante der Lauffläche etwa radial nach innen zu einer Wulststruktur (12) erstreckende Seitenwand (8) und eine sich längs einer axialen Innenseite der Seitenwand (8) zur Wulststruktur (12) erstreckende Karkasse umfasst, wobei die Wulststruktur (12) einen axial innerhalb der Seitenwand (8) umlaufenden Wulstkern (34) und einen sich zumindest teilweise radial nach innen zum Wulstkern (34) erstreckenden ersten Wulstreifen (10) umfasst, und die Karkasse eine erste Lage (14) und eine zweite Lage (15) hat, **dadurch gekennzeichnet, dass**
(i) die zweite Lage (15) sich radial von der Seitenwand (8) nach innen zu einem an einem die Wulststruktur (12) angrenzenden Abschlussende (151) erstreckt, ein erstes Kernprofil (38) an den Wulstkern (34) oder an eine radial obere Fläche des Wulstkerns (34) stößt, und ein Versteifungselement (24) zumindest teilweise zwischen der ersten Lage (14) und dem ersten Kernprofil (38) angeordnet ist, wobei das Versteifungselement (24) sich radial nach außen von einem dem Wulstkern (34) benachbarten Ort zu einem Ort, der sich radial nach außen von dem ersten Kernprofil (38) befindet, erstreckt; und/oder
(ii) ein erstes Kernprofil (38) an den Wulstkern (34) oder an eine radial oberen Fläche des Wulstkerns (34) stößt, und ein Versteifungselement (24) zwischen der ersten Lage (14) und dem ersten Kernprofil (38) angeordnet ist, wobei das Versteifungselement (24) teilweise auch zwischen einem sich nach unten und zu dem Wulstkern (34) erstreckenden ersten Abschnitt der ersten Lage (14) und einem sich nach oben und weg von dem Wulstkern (34) erstreckenden zweiten Abschnitt der ersten Lage (14) angeordnet ist, und ferner, wobei mindestens eines von dem ersten Kernprofil (38), dem Versteifungselement und dem ersten Wulstreifen (10) ein Verstärkungsmaterial enthält ; und/oder
(iii) die zweite Lage (15) sich radial von der Seitenwand (8) nach innen zu einem an die Wulststruktur (12) angrenzenden Abschlussende (151) erstreckt, ein erstes Kernprofil (38) an den Wulstkern (34) oder an eine radial obere Fläche des Wulstkerns (34) stößt, ein Versteifungselement (24) zumindest teilweise zwischen der ersten Lage (14) und dem ersten Kernprofil (38) angeordnet ist, und ein zweites Kernprofil (25) zumindest teilweise zwischen der zweiten Lage (15) und dem ersten Wulststreifen (10) angeordnet ist.

2. Reifen nach Anspruch 1, wobei die Wulststruktur (12) ferner einen zweiten Wulststreifen (22) umfasst, der sich in der Nähe des Wulstkerns (34) befindet und/oder zumindest teilweise radial innerhalb des Wulstkerns (34) angeordnet ist.

3. Reifen nach Anspruch 1, wobei der erste Wulststreifen (10) sich zumindest teilweise axial außerhalb der zweiten Lage (15) erstreckt.

4. Reifen nach Anspruch 1, 2 oder 3, wobei das zweite Kernprofil (25) der Option (iii) oder ein zweites Kernprofil (25) in Option (i) oder (ii) auf einer axial äußeren Seite des Wulstkerns (34) und/oder radial oberhalb des Wulstkerns (34) positioniert ist.

5. Reifen nach mindestens einem der vorhergehenden Ansprüche, wobei das erste und/oder das zweite Kernprofil(e) (25, 38) ein Verstärkungsmaterial enthält/enthalten.

6. Reifen nach mindestens einem der vorhergehenden Ansprüche, wobei der erste und/oder der zweite Wulstreifen (22, 10) ein Verstärkungsmaterial enthält/enthalten.

7. Reifen nach mindestens einem der vorhergehenden Ansprüche, wobei das Versteifungselement (24) ein Verstärkungsmaterial enthält.

8. Reifen nach Anspruch 1, wobei die Wulststruktur (12) einen zweiten Wulststreifen (22) umfasst, der an den Wulstkern (34) angrenzt.

9. Reifen nach Anspruch 1, wobei ein zweites Kernprofil (25) auf einer axialen Innenseite der Seitenwand (8) positioniert ist.

10. Reifen nach Anspruch 1, wobei ein zweites Kernprofil (25) auf einer axial und radial äußeren Seite des Wulstkerns (34) positioniert ist oder ein zweites Kernprofil (25) auf einer radial äußeren Seite des Wulstkerns (34) positioniert ist.

## Revendications

1. Bandage pneumatique comprenant une bande de roulement, flanc (8) qui s'étend à partir d'un bord de la bande de roulement de manière approximative dans une direction radiale vers l'intérieur jusqu'à une structure de talon (12), et une carcasse qui s'étend le long d'un côté interne, en direction axiale, du flanc (8) jusqu'à la structure de talon (12), la structure de talon (12) englobant une tringle de talon (34) qui s'étend en direction circonférentielle vers l'intérieur du flanc (8) en direction axiale et une première bandelette talon (10) qui s'étend au moins en partie vers l'intérieur en direction radiale dans la direction de la tringle de talon (34), et la carcasse possédant une première nappe (14) et une deuxième nappe (15), **caractérisé en ce que** :
(i) la deuxième nappe (15) s'étend vers l'intérieur du flanc (I) dans la direction radiale jusqu'à une extrémité terminale (151) en position adjacente à la structure de talon (12), un premier bourrage sur tringle (38) vient buter contre la tringle de talon (34) ou contre une surface supérieure, dans la direction radiale, de la tringle de talon (34), et un élément de renforcement (24) est disposé au moins en partie entre la première nappe (14) et le premier bourrage sur tringle (38), l'élément de renforcement (24) s'étendant vers l'extérieur dans la direction radiale à partir d'un endroit situé à proximité de la tringle de talon (34) jusqu'à un endroit situé à l'extérieur, en direction radiale, du premier bourrage sur tringle (38) ; et/ou
(ii) un premier bourrage sur tringle (38) vient buter contre la tringle de talon (34) ou contre une surface supérieure, dans la direction radiale, de la tringle de talon (34), et un élément de renforcement (24) est disposé en partie entre la première nappe (14) et le premier bourrage sur tringle (38), l'élément de renforcement (24) étant également disposé en partie entre une première portion de la première nappe (14) s'étendant vers le bas et en direction de la tringle de talon (34) et une autre deuxième portion de la première nappe (14) s'étendant vers le haut et à l'écart de la tringle de talon (30), et en outre dans lequel au moins un élément choisi parmi le premier bourrage sur tringle (38) et l'élément de renforcement et la première bandelette talon (10) contient une matière de renforcement ; et/ou
(iii) la deuxième nappe (15) s'étend vers l'intérieur, en direction radiale, à partir du flanc (8) jusqu'à une extrémité terminale (151) en position adjacente à la structure de talon (12), un premier bourrage sur tringle (38) vient buter contre la tringle de talon ou contre une surface supérieure, dans la direction radiale, de la tringle de talon (34), et un élément de renforcement (24) est disposé au moins en partie entre la première nappe (14) et le premier bourrage sur tringle (38), et un deuxième bourrage sur tringle (25) est disposé au moins en partie entre la deuxième nappe (15) et la première bandelette talon (10).

2. Bandage pneumatique selon la revendication 1, dans lequel la structure de talon (12) englobe en outre une deuxième bandelette talon (22) située à proximité de la tringle de talon (104) et/ou située au moins en partie à l'intérieur, en direction radiale, de la tringle de talon (34).

3. Bandage pneumatique selon la revendication 1, dans lequel la première bandelette talon (10) s'étendant au moins en partie, à l'extérieur de la deuxième nappe (15), dans la direction axiale.

4. Bandage pneumatique selon la revendication 1, 2 ou 3, dans lequel le deuxième bourrage sur tringle (25) de l'option (iii) ou un deuxième bourrage sur tringle (25) dans l'option (i) ou (ii) est disposé sur un côté externe de la tringle de talon (34), dans la direction axiale, et/ou vers le haut par rapport à la tringle de talon (100), dans la direction radiale.

5. Bandage pneumatique selon au moins une des revendications précédentes, dans lequel le premier et/ou le deuxième bourrage sur tringle (25, 38) contient/contiennent une matière de renforcement.

6. Bandage pneumatique selon au moins une des revendications précédentes, dans lequel la première et/ou la deuxième bandelette talon (22, 10) contient/contiennent une matière de renforcement.

7. Bandage pneumatique selon au moins une des revendications précédentes, dans lequel l'élément de renforcement (24) contient une matière de renforcement.

8. Bandage pneumatique selon la revendication 1, dans lequel la structure de talon (12) englobe une deuxième bandelette talon (22) en position adjacente à la tringle de talon (34).

9. Bandage pneumatique selon la revendication 1, dans lequel un deuxième bourrage sur tringle (25) est disposé sur un côté interne du flanc (8), dans la direction axiale.

10. Bandage pneumatique selon la revendication 1, dans lequel un deuxième bourrage sur tringle (25) est disposé sur un côté externe, dans la direction axiale et dans la direction radiale, de la tringle de talon (34) ou un deuxième bourrage sur tringle (25) est disposé sur un côté externe de la tringle de talon (34), dans la direction radiale.
